# EUROPÄISCHE PATENTSCHRIFT

(11) **EP 0 435 411 B1**
(45) Veröffentlichungstag und Bekanntmachung des Hinweises auf die Patenterteilung: **11.05.1994**
(21) Anmeldenummer: 90250310.1
(22) Anmeldetag: 14.12.1990
(51) Int. Cl.: B29C 43/24, B29C 43/58

(54) **Schmelzwalzenkalander mit mindestens zwei Kalanderwalzen**
Melt calender system with at least two calender rolls
Calandre à cylindres de fusion avec au moins deux rouleaux

(30) Priorität: 28.12.1989 DE 3943389; 28.12.1989 DE 3943390
(43) Veröffentlichungstag der Anmeldung: 03.07.1991
(73) Patentinhaber: Ramisch Kleinewefers GmbH, D-47803 Krefeld (DE)
(72) Erfinder: Patermann, Hans-Dieter, W-4156 Willich 2 (DE)
(74) Vertreter: Knoblauch, Ulrich, Dr.-Ing.

(56) Entgegenhaltungen:
- DE-A- 2 555 677
- DE-A- 3 300 251
- DE-A- 3 338 625
- DE-A- 3 410 136
- US-A- 3 182 587
- US-A- 3 599 288
- US-A- 3 600 747
- KUNSTSTOFFE, Band 70, Nr. 2, Januar 1980, Seiten 5-9, München, DE; M. KLITTICH:"Die Dickenprofilregelung - ein Beitrag zur Automatisierung desFolienkalanders"

## Beschreibung

Die Erfindung betrifft einen Schmelzwalzenkalander zum Herstellen von Folienbahnen und/oder Beschichtungen aus thermoplastischem Material, mit zwei horizontal nebeneinander angeordneten Schmelzwalzen, die einen von oben mit Vormaterial in Form von Dryblend, Granulat oder extrudiertem Strang oder dergleichen beschickbaren Arbeitsspalt einstellbarer Breite bilden und von denen mindestens eine spaltgeregelt und beheizbar ausgebildet ist, wobei eine Meßeinrichtung zum Messen der Dicke der hergestellen Folienbahn vorgesehen und die Breite des Arbeitsspaltes zwischen den beiden Schmelzwalzen kontinuierlich durch eine Regeleinrichtung einstellbar ist, die den eine hydraulische Stelleinrichtung zur Beeinflussung des Abstandes der beiden Schmelzwalzenoberflächen beaufschlagenden hydraulischen Druck in Abhängigkeit von den ihr zugeführten Meßwerten der Meßeinrichtung steuert.

Bei Schmelzwalzenkalandern dieser Art, wie sie aus der US-PS 36 35 627 bekannt sind, bereitet die Einhaltung eines gewünschten Arbeitsspaltprofiles über die gesamte Walzenerstreckung bei großen Arbeitsbreiten, wie sie heutzutage üblich sind und die vier Meter und mehr betragen können, Schwierigkeiten, weil eine Konstanz des Arbeitsspaltprofiles über die gesamte Walzenlänge vorausgesetzt wird und dieses durch die Regeleinrichtung für die Arbeitsspaltbreite nicht über die Walzenlänge beeinflußbar ist. Ahnliches gilt für Schmelzwalzenkalander, wie sie in der DE-PS 12 13 107 beschrieben sind, wobei es ebenfalls schwierig ist, die Breite des Arbeitsspaltes zwischen den Schmelzwalzen über die gesamte Walzenlänge, also über die gesamte Breite der herzustellenden Folienbahn, so konstant zu halten, wie dies für die Einhaltung einer über die gesamte Folienbahnbreite gleichmäßigen Dicke der Folienbahn und damit für deren Qualität wünschenswert ist. Diese Schwierigkeit beruht vor allem darauf, daß zur Herstellung größerer Folienbahnbreiten immer größere Walzenlängen Verwendung finden, teilweise vier Meter und mehr betragend, so daß auch bei Verwendung bekannter Biegekompensationsverfahren und sehr starrer und schwerer Ausbildung der Walzen ein Konstanthalten des Arbeitsspaltprofils über die gesamte Bahnbreite nur schwer möglich ist.

Aus der DE-PS 34 10 136 ist es zwar bereits bekannt, die Liniendruckverteilung bei Walzenanordnungen zur Druckbehandlung von Warenbahnen durch örtlich unterschiedliche Beeinflussung von Stell- bzw. Stützelementen von hydraulischen Walzen mit Biegekompensation zu steuern, jedoch liegen dabei gänzlich andere Verhältnisse vor als bei Schmelzwalzenkalandern, bei denen, wie bereits ausgeführt, die einzelnen Walzen nicht unter Druck aneinanderliegen, sondern einen vorgegebenen Arbeitsspalt freilassen, in dem sich der Druck dann aufgrund der vorgegebenen Verhältnisse einstellt.

Auch bei dem aus der DE-OS 23 17 660 beschriebenen Schmelzwalzenkalander, bei dem mindestens drei Kalanderwalzen vorgesehen ist, wobei die beiden ersten Schmelzwalzen zwischen sich den eigentlichen Schmelzspalt und die zweite und die dritte Kalanderwalze zwischen sich einen weiteren Arbeitsspalt bilden, bestehen die vorstehend erläuterten Schwierigkeiten der Konstanzhaltung bzw. Einstellung des Arbeitsspaltprofiles über die gesamte Walzenbreite.

Aus der DE-OS 25 55 677 ist es zwar bekannt, die Anpreßkraft eines Walzenwerkes über die Walzenbreite zu variieren, jedoch handelt es sich dabei um eine Regelung des örtlichen Walzendruckes, die nur bei druckfester Materialbahn anwendbar ist, nicht aber bei einer zwischen den einzelnen Walzen vorhandenen viskosen Flüssigkeit wie dies bei Schmelzwalzenkalandern der Fall ist, da sich hier eine Arbeitsspaltbreite Null einstellen würde. Ähnliche Vorrichtungen sind aus der DE-PS 33 29 595, der DE-OS 34 10 136 und der DE-OS 35 33 210 bekannt, bei denen es insgesamt stets lediglich um die Variation des Liniendruckes, also der Anpreßkraft, nicht aber des Abstandes zwischen den Walzen geht.

Schließlich ist aus DE 33 00 251 A1 ein Schmelzwalzenkalander bekannt, der vier Walzen aufweist, die in einer winkligen Konfiguration angeordnet sind. Zwei Schmelzwalzen liegen horizontal nebeneinander. Die zweite Schmelzwalze ist in einer vertikalen Reihe mit zwei anderen Walzen angeordnet. Die zweite und vierte Walze ist eine biegekompensierte Kalibrierwalze mit hydraulisch ansteuerbaren Stellelementen. Die Stellelemente der letzten Walze werden von einer Dickenmeßvorrichtung über einen Regler angesteuert. Die Stellelemente der zweiten Walze werden mit einem konstanten Druck angesteuert.

Der Erfindung liegt die Aufgabe zugrunde, einen Schmelzwalzenkalander der gattungsgemäßen Art zu schaffen, mittels dessen auch bei großen Walzenlängen das Arbeitsspaltprofil über die gesamte breite der herzustellenden Folienbahn zuverlässig zur Erzielung einer gleichbleibenden Dicke und damit Qualität der Folienbahn eingestellt werden kann.

Erfindungsgemäß wird diese Aufgabe durch die Merkmale des Anspruchs 1 oder durch die Merkmale des Anspruchs 2 gelöst.

Die Erfindung sieht gegebenenfalls auch vor, daß die erste und eine letzte der Kalanderwalzen als Kalibrierwalzen ausgebildet sind und mindestens eine dazwischen angeordnete Zwischenwalze als Walze geringeren Durchmessers mit geringerer Biegesteifigkeit ausgebildet ist.

Eine weitere Ausführungsform der Erfindung ist dadurch gekennzeichnet, daß die Zwischenwalze(n) einen - vorzugsweise wesentlich - geringeren Durchmesser als die erste und letzte der Kalanderwalzen hat/haben.

Nach der Erfindung kann auch vorgesehen sein, daß die als Kalibrierwalze(n) ausgebildete(n) Kalanderwalze(n) als Biegeausgleichswalze, z. B. als Thermo-HYDREIN-Walze(n) ausgebildet ist/sind.

Eine weitere Ausführungsform der Erfindung ist dadurch gekennzeichnet, daß die vorletzte Walze als heizbare Kalibrierwalze, z. B. als Thermo-HYDREIN-Walze, ausgebildet ist.

Die Erfindung schlägt auch vor, daß die Meßeinrichtung berührungslos arbeitet.

Es kann auch vorgesehen sein, daß die Meßeinrichtung optische Sensoren aufweist.

Nach der Erfindung kann auch vorgesehen sein, daß die Meßeinrichtung Laser-Sensoren aufweist.

Eine weitere Ausführungsform der Erfindung schlägt vor, daß die Meßeinrichtung als Strahlungsmeßeinrichtung ausgebildet ist.

Die Erfindung kann auch dadurch gekennzeichnet sein, daß die Meßeinrichtung akustische Sensoren aufweist.

Nach der Erfindung kann auch vorgesehen sein, daß die Meßeinrichtung Gewichtssensoren aufweist.

Eine weitere Ausführungsform der Erfindung zeichnet sich dadurch aus, daß die Meßeinrichtung bei Verwendung der Folienbahn zum Beschichten einer anderen Materialbahn im Differenzverfahren arbeitet.

Der erfindungsgemäße Schmelzwalzenkalander kann auch so ausgebildet sein, daß die Meßeinrichtung nahe dem Umfang der in Laufrichtung der Folienbahn letzten der Kalanderwalzen angeordnet ist.

Der Erfindung liegt die überraschende Erkenntnis zugrunde, daß es gelingt, die eingangs beschriebenen Nachteile bekannter Schmelzwalzenkalander dadurch zu beseitigen, daß die Arbeitsspaltbreite bzw. -weite dadurch kontinuierlich über die gesamte Arbeitsbreite gesteuert wird, daß in Verbindung mit hydraulisch biegekompensierten Walzen, wie sie aus der DE-PS 34 10 136 oder EP-OS 0 221 291 vorgesehen sind, die beanspruchte Meßeinrichtung mit zwischengeschalteter Regeleinrichtung verwendet wird. Je nachdem, welche Meßwerte von den einzelnen Meßstellen der Meßeinrichtung geliefert werden, läßt sich der Abstand der Oberfläche der als Kalibrierwalze ausgebildeten Schmelzwalze von der gegenüberliegenden Walzenoberfläche so einstellen, daß sich an der betreffenden Stelle, über die Breite der herzustellenden Folienbahn gesehen, die gewünschte Spaltweite und damit die gewünschte Folienbahndicke ergibt.

Wesentlich ist dabei, daß über die Walzenlänge nicht der örtlich durch die Kalibrierwalze(n) auf die Gegenwalze ausgeübte Druck variiert wird, sondern die Arbeitsspaltbreite geregelt eingestellt wird, so daß sich auch bei nicht-druckfester Materialbahn keine Arbeitsspaltbreite Null ergibt, sondern der zwischen den Schmelzwalzenoberflächen geregelt eingestellte Arbeitsspalt die Folienbahndicke über die gesamte Walzenlänge bzw. -breite auf dem gewünschten Wert zu halten gestattet.

Die Lehre der Erfindung gewährleistet die Einhaltung und Einstellung der gewünschten Arbeitsspaltbreite bzw.-weite auch bei der bei Drei- und Mehrwalzenkalandern üblichen unterschiedlichen Temperatur der einzelnen Kalanderwalzen, damit auch der notwendigerweise vorhandenen Temperaturdifferenz und der daraus resultierenden unterschiedlichen Ausdehnung des Walzenmaterials der herzustellenden Folienbahn in den verschiedenen aufeinanderfolgenden Walzspalten. Besonders gut läßt sich die der Erfindung zugrunde liegende Aufgabe natürlich lösen, wenn die erste und letzte Kalanderwalze als z. B. Thermo-HYDREIN-Walze ausgebildet sind, mit einer oder mehreren dazwischen angeordneten Walzen geringerer Biegefestigkeit, da sich hierbei z. B. beim Dreiwalzenkalander beide Arbeitsspalte durch entsprechende Beeinflussung des Linienprofils der den Arbeitsspalt begrenzenden Walzenoberfläche der jeweiligen Kalibrierwalze sehr genau zur Gewährleistung der gewünschten Querschnittprofils der herzustellenden Folienbahn einstellen läßt.

Die Horizontalanordnung der die Rotationsachsen der Kalanderwalzen enthaltenden Ebene hat bei dem Schmelzkalander nach der Erfindung in seinen verschiedenen Ausführungsformen noch den Vorteil, daß hierdurch Wartungs- und Reparaturarbeiten erheblich erleichtert werden, weil jede einzelne der Kalanderwalzen praktisch frei nach oben, unten oder auch seitlich herausgenommen werden kann, ohne daß die anderen Kalanderwalzen hierdurch beeinflußt werden. Auch die Zuordnung weiterer Komponenten, wie Zuführeinrichtungen für zu beschichtende Materialbahnen, nachgeschaltete Kaschier-, Abnahme- oder Reckwerke und dergleichen, gestaltet sich konstruktiv wesentlich einfacher als bei schräger oder vertikaler Übereinanderanordnung der einzelnen Kalanderwalzen.

Weitere Merkmale und Vorteile der Erfindung ergeben sich aus der nachstehenden Beschreibung, in der Ausführungsbeispiele anhand einer schematischen Zeichnung im einzelnen erläutert sind. Dabei zeigt:
- Fig. 1: ein Ausführungsbeispiel eines Schmelzwalzenkalanders nach der Erfindung im Schnitt senkrecht zur Rotationsachse der Kalanderwalzen;
- Fig. 2: das Ausführungsbeispiel von Figur 1 in schematischer Flußdiagrammdarstellung;
- Fig. 3: ein anderes Ausführungsbeispiel eines Schmelzwalzenkalanders, nämlich eines Dreiwalzenkalanders nach der Erfindung im Schnitt senkrecht zur Rotationsachse der Kalanderwalzen; und
- Fig. 4: das Ausführungsbeispiel von Figur 3 in schematischer Flußdiagrammdarstellung.

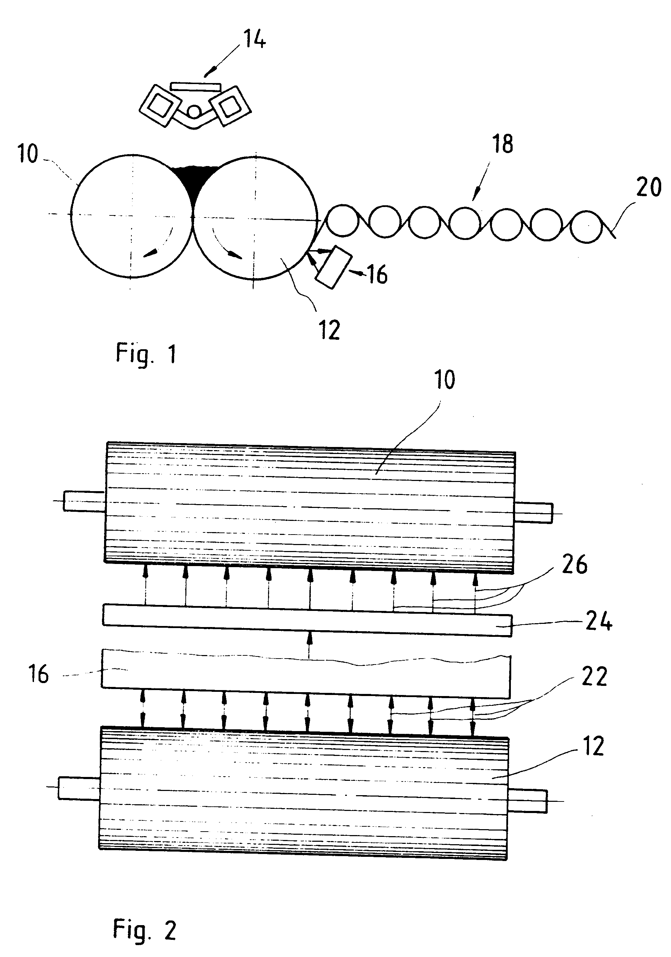

Wie Figur 1 erkennen läßt, ist der Schmelzwalzenkalander nach der Erfindung bei dem dort gezeigten Ausführungsbeispiel als Zweiwalzenkalander ausgebildet, wobei eine erste Walze 10 oder eine zweite Walze 12, wahlweise als Thermo-HYDREIN-Walze ausgebildet, gemeinsam einen Arbeitsspalt bilden. Dabei kann der als Thermo-HYDREIN-Walze ausgebildeten Walze eine weitere Walze zugeordnet sein. Deren Arbeitsspalt wird von einer Zuführeinrichtung 14 aus in bekannter Weise mit thermoplastischem Vormaterial, z. B. in Dryblend- oder Granulatform, gefüllt. Der Oberfläche der Kalanderwalze 12 ist eine Meßeinrichtung 16 zugeordnet, welche die Dicke der über eine Rollengangabnahme, altervativ über ein Reckwerk 18, abgeführten Folienbahn 20 berühungslos mißt, wobei beim gezeigten Ausführungsbeispiel eine Meßeinrichtung 16, z. B. mit Laser-Sensoren, Verwendung findet.

Wie Figur 2 erkennen läßt, weist die Meßeinrichtung 16 über die Länge der Kalanderwalze 12 verteilt eine Vielzahl von Meßstellen 12 auf, deren Meßwerte, die jeweilige lokale Ist-Dicke der hergestellten Folienbahn angebend, einer elektronischen Regeleinrichtung 24 zugeführt werden, von der aus über die Länge der Thermohydreinwalze 10 verteilt angeordnete hydraulische Stellelemente 26 mit jeweils geregeltem hydraulischen Druck beeinflußt werden. Hierdurch wird die Breite des Arbeitsspaltes zwischen den Kalanderwalzen 10 und 12 über die gesamte Walzenlänge in der gewünschten Weise eingestellt, wobei die kontinuierliche Regelung eine einwandfreie Konstanthaltung der Dicke der hergestellten Folienbahn 20 über die gesamte Warenbreite ermöglicht.

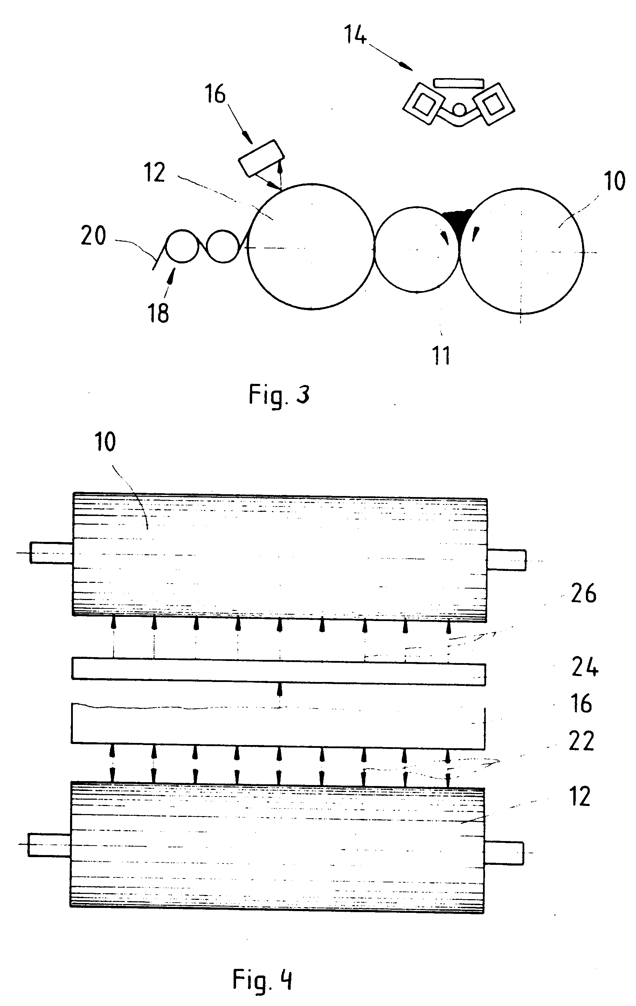

Wie Figur 3 erkennen läßt, weist der Dreiwalzenkalander nach der Erfindung bei dem dort gezeigten Ausführungsbeispiel eine erste Kalanderwalze 10, ausgebildet als Starrwalze, eine zweite Kalanderwalze, bei dem gezeigten Ausführungsbeispiel als Zwischenwalze 11 ausgebildet, sowie eine Kalanderwalze 12, bei dem gezeigten Ausführungsbeispiel als Thermo-HYDREIN-Walze ausgebildet, auf, wobei der zwischen der Kalanderwalze 10 und der Kalanderwalze 11 gebildete Arbeitsspalt von einer Zuführeinrichtung 14 aus mit thermoplastischem Vormaterial, vorzugsweise einem Extruderstrang, plastifiziert, homogenisiert und entgast, beschickbar ist. Die auf der letzten Kalanderwalze 12 aufliegende Folienbahn 20, die nach dem Verlassen der Walzenoberfläche der Kalanderwalze 12 ein Kaschier- bzw. Abnahme- oder ein Reckwerk 18 bekannter Art durchläuft, wird in ihrer Dicke mittels einer Meßeinrichtung 16 kontinuierlich gemessen.

Die Funktionsweise der Meßeinrichtung 16 ergibt sich aus Figur 4: Danach weist die Meßeinrichtung 16 eine Vielzahl von Meßstellen 22, hier in Form optischer Sensoren, auf, wobei die über die Breite örtlich erfaßten Dickenwerte der Meßeinrichtung 16 einer Regeleinrichtung 24 zugeführt werden, welche wiederum Stellelemente 26 der Thermo-HYDREIN-walze 10 mit über die Walzenlänge örtlich variierendem hydraulischen Druck beaufschlagt, wodurch insgesamt die Arbeitsspaltbreite in der gewünschten Weise eingestellt werden kann.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Schmelzwalzenkalander zum Herstellen von Folienbah nen und/oder Beschichtungen aus thermoplastischem Material
- mit einem Walzensatz aus nur zwei horizontal nebeneinander angeordneten Schmelzwalzen (10, 12), die einen von oben mit Vormaterial in Form von Dryblend, Granulat, extrudiertem Strang oder dergleichen beschickbaren Arbeitsspalt einstellbarer Breite bilden und von denen mindestens eine Schmelzwalze (10) als biegekompensierte Kalibrierwalze mit einer Mehrzahl von über die Walzenlänge mit Abstand angeordneten hydraulischen Stellelementen (26) zur örtlichen Beeinflussung des Abstandes der Kalibrierwalzenoberfläche von der Oberfläche der ihr gegenüberliegenden Schmelzwalze (12) ausgebildet ist,
- mit einer Meßeinrichtung (16), die eine Reihe mit gegenseitigem Abstand senkrecht zur Laufrichtung der Folienbahn (20) angeordneter Meßstellen (22) zum Messen er örtlichen Dicke der hergestellten Folienbahn aufweist,
- und mit einer Regeleinrichtung (24), die den die hydraulischen Stellelemente (26) beaufschlagenden hydraulischen Druck in Abhängigkeit von den ihr zugeführten Meßwerten der Meßeinrichtung (16) steuert und dadurch die Breite des Arbeitsspaltes zwischen den beiden Schmelzwalzen kontinuierlich einstellt.

2. Schmelzwalzenkalander zum Herstellen von Folienbahnen und/oder Beschichtungen aus thermoplatischem Material
- mit einem Walzensatz aus mindestens drei horizontal nebeneinander angeordneten Kalanderwalzen (10, 11, 12), deren Rotationsachsen in einer gemeinsamen Ebene liegen, von denen die erste (10) und die zweite (11) als Schmelzwalzen dienen und zwischen sich einen von oben mit Vormaterial in Form von Granulat, Dryblend, extrudiertem Strang oder dergleichen beschickbaren Schmelzspalt einstellbarer Breite bilden, zwischen weiteren Kalanderwalzen (11, 12) mindestens ein weiterer Arbeitsspalt gebildet ist, den die Folienbahn vor der Abgabe an einen Abnehmer, ein Reckwerk oder dergleichen durchläuft und von denen die erste Schmelzwalze (10) und/oder die letzte Kalanderwalze (12) als biegekompensierte Kalibrierwalze mit einer Mehrzahl von über die Walzenlänge mit Abstand angeordneten hydraulischen Stellelementen (26) zur örtlichen Beeinflussung des Abstandes der Kalibrierwalzenoberfläche von der Oberfläche der ihr gegenüberliegenden Kalanderwalze ausgebildet ist,
- mit einer Meßeinrichtung (16), die eine Reihe mit gegenseitigem Abstand senkrecht zur Laufrichtung der Folienbahn (20) angeordneten Meßstellen (22) zum Messen der örtlichen Dicke der hergestellten Folienbahn aufweist, und
- mit einer Regeleinrichtung (24), die den die hydraulischen Stellelemente (26) beaufschlagenden hydraulischen Druck in Abhängigkeit von den ihr zugeführten Meßwerten der Meßeinrichtung (16) steuert und dadurch die Breite des für die Foliendicke verantwortlichen Arbeitsspaltes kontinuierlich einstellt.

3. Schmelzwalzenkalander nach Anspruch 2, dadurch gekennzeichnet, daß die erste (10) und eine letzte (12) der Kalanderwalzen (10, 11, 12) als Kalibrierwalzen ausgebildet sind und mindestens eine dazwischen angeordnete Zwischenwalze (11) als Walze geringeren Durchmessers mit geringerer Biegesteifigkeit ausgebildet ist.

4. Schmelzwalzenkalander nach Anspruch 3, dadurch gekennzeichnet, daß die Zwischenwalze(n) (11) einen - vorzugsweise wesentlich - geringeren Durchmesser als die erste (10) und letzte (12) der Kalanderwalzen hat/haben.

5. Schmelzwalzenkalander nach einem der Ansprüche 1 bis 4, dadurch gekennzeichnet, daß die als Kalibrierwalze(n) ausgebildete(n) Kalanderwalze(n) (10, 12) als Biegeausgleichswalze(n), z. B. als Thermo-HYDREIN-Walze(n) ausgebildet ist/sind.

6. Schmelzwalzenkalander nach einem der Ansprüche 1 bis 5, dadurch gekennzeichnet, daß die Kalanderwalzen (10, 11, 12) auf unterschiedliche Temperaturen beheizbar sind.

7. Schmelzwalzenkalander nach einem der Ansprüche 2 bis 6, dadurch gekennzeichnet, daß die vorletzte Walze (11) als beheizbare Kalibrierwalze, z. B. als Thermo-HYDREIN-Walze, ausgebildet ist.

8. Schmelzwalzenkalander nach einem der Ansprüche 1 bis 7, dadurch gekennzeichnet, daß die Meßeinrichtung (16) berührungslos arbeitet.

9. Schmelzwalzenkalander nach Anspruch 8, dadurch gekennzeichnet, daß die Meßeinrichtung (16) optische Sensoren aufweist.

10. Schmelzwalzenkalander nach Anspruch 9, dadurch gekennzeichnet, daß die Meßeinrichtung (16) Laser-Sensoren aufweist.

11. Schmelzwalzenkalander nach Anspruch 8, dadurch gekennzeichnet, daß die Meßeinrichtung (16) als Strahlungsmeßeinrichtung ausgebildet ist.

12. Schmelzwalzenkalander nach Anspruch 8, dadurch gekennzeichnet, daß die Meßeinrichtung (16) akustische Sensoren aufweist.

13. Schmelzwalzenkalander nach einem der Ansprüche 1 bis 7, dadurch gekennzeichnet, daß die Meßeinrichtung (16) Gewichtssensoren aufweist.

14. Schmelzwalzenkalander nach Anspruch 13, dadurch gekennzeichnet, daß die Meßeinrichtung (16) bei Verwendung der Folienbahn (20) zum Beschichten einer anderen Materialbahn im Differenzverfahren arbeitet.

15. Schmelzwalzenkalander nach einem der Ansprüche 1 bis 14, dadurch gekennzeichnet, daß die Meßeinrichtung (16) nahe dem Umfang der in Laufrichtung der Folienbahn (20) letzten (12) der Kalanderwalzen angeordnet ist.

## Claims

1. Melt calender system for producing film webs and/or coatings of thermoplastic material, comprising a set of rolls consisting of only two melt rolls (10, 12) arranged horizontally alongside one another and forming a working nip of adjustable width which can be fed from above with raw material in the form of dry blend, granules, extrudate or the like and at least one melt roll (10) being designed as a deflection-compensated calibrating roll with a plurality of hydraulic control elements (26) arranged at intervals over the length of the roll for local control of the distance between the surface of the calibrating roll and the surface of the opposing melt roll (12), a measuring device (16) having a series of measuring points (22) arranged at regular intervals perpendicularly to the feed direction of the film web (20) for measuring the local thickness of the film web produced, and a control unit (24) which controls the hydraulic pressure applied to the hydraulic control elements (26) as a function of the measured values fed thereto by the measuring device (16) and thus continually adjusts the width of the working nip between the two melt rolls.

2. Melt calender system for producing film webs and/or coatings of thermoplastic material, comprising a set of rolls consisting of at least three calender rolls (10, 11, 12) arranged horizontally alongside one another, the axes of rotation of which are situated in one plane, the first (10) and the second (11) calender rolls serving as melt rolls and forming between them a melt nip of adjustable width which can be fed from above with raw material in the form of granules, dry blend, extrudate or the like, at least one further working nip being formed between further calender rolls (11, 12) and being traversed by the film web before it is delivered to a take-off device, godet unit or the like and the first melt roll (10) and/or the last calender roll (12) being designed as deflection-compensated calibrating rolls with a plurality of hydraulic control elements (26) arranged at intervals over the length of the roll for local control of the distance between the surface of the calibrating roll and the surface of the opposing calender roll, a measuring device (16) having a series of measuring points (22) arranged at regular intervals perpendicularly to the feed direction of the film web (20) for measuring the local thickness of the film web produced, and a control unit (24) which controls the hydraulic pressure applied to the hydraulic control elements (26) as a function of the measured values fed thereto by the measuring device (16) and thus continually adjusts the width of the working nip responsible for the film thickness.

3. Melt calender system according to claim 2, characterised in that the first (10) and a last (12) of the calender rolls (10, 11, 12) are designed as calibrating rolls and at least one intermediate roll (11) arranged therebetween is designed as a roll having a smaller diameter with lower bending strength.

4. Melt calender system according to claim 3, characterised in that the intermediate roll(s) (11) has/have a preferably substantially smaller diameter than the first (10) and last (12) of the calender rolls.

5. Melt calender system according to one of claims 1 to 4, characterised in that the calender roll(s) (10, 12) designed as calibrating roll(s) is/are designed as deflection-compensating roll(s), e.g. as thermo-HYDREIN roll(s).

6. Melt calender system according to one of claims 1 to 5, characterised in that the calender rolls (10, 11, 12) can be heated to different temperatures.

7. Melt calender system according to one of claims 2 to 6, characterised in that the penultimate roll (11) is designed as a heatable calibrating roll, e.g. as a thermo-HYDREIN roll.

8. Melt calender system according to one of claims 1 to 7, characterised in that the measuring device (16) operates in a contactless manner.

9. Melt calender system according to claim 8, characterised in that the measuring device (16) has optical sensors.

10. Melt calender system according to claim 9, characterised in that the measuring device (16) has laser sensors.

11. Melt calender system according to claim 8, characterised in that the measuring device (16) is designed as a radiation measuring device.

12. Melt calender system according to claim 8, characterised in that the measuring device (16) has acoustical sensors.

13. Melt calender system according to one of claims 1 to 7, characterised in that the measuring device (16) has weight sensors.

14. Melt calender system according to claim 13, characterised in that the measuring device (16) operates according to the differential method when the film web (20) is used to coat another material web.

15. Melt calender system according to one of claims 1 to 14, characterised in that the measuring device (16) is arranged close to the circumference of the last (12) of the calender rolls in the feed direction of the film web (20).

## Revendications

1. Calandre à cylindres de fusion pour la fabrication de nappes de feuille et/ou de revêtements en matière thermoplastique,
- comportant un jeu de cylindres formé uniquement de deux cylindres de fusion (10, 12) disposés horizontalement côte à côte, qui forment une fente de travail de largeur réglable, et pouvant être remplie par le haut de matériau brut sous la forme de mélange sec, de granulés, de barre extrudée ou analogue, et dont au moins un cylindre de fusion (10) est réalisé en tant que cylindre de calibrage à compensation de flexion en comprenant plusieurs éléments de réglage hydrauliques (26) disposés en étant espacés les uns des autres le long de la longueur du cylindre, et destinés à influencer localement la distance de la surface du cylindre de calibrage à la surface du cylindre de fusion (12) qui lui est opposé,
- comportant un dispositif de mesure (16) qui comprend une rangée de zones de mesure (22) disposées à distance les unes des autres et perpendiculairement à la direction d'avance de la nappe de feuille (20), et destinées à mesurer l'épaisseur locale de la nappe de feuille fabriquée,
- et comportant un dispositif de régulation (24) qui commande la pression hydraulique sollicitant les éléments de réglage hydrauliques (26) en fonction des valeurs de mesure du dispositif de mesure (16), qui lui ont été transmises, en réglant ainsi de manière continue, la largeur de la fente de travail entre les deux cylindres de fusion.

2. Calandre à cylindres de fusion pour la fabrication de nappes de feuille et/ou de revêtements en matière thermoplastique,
- comportant un jeu de cylindres formé au moins de trois cylindres de calandre (10, 11, 12) disposés horizontalement côte à côte, et dont les axes de rotation sont situés dans un plan commun, le premier (10) et le second (11) de ces cylindres servant de cylindres de fusion qui forment entre-eux une fente de fusion de largeur réglable, et pouvant être remplie, par le haut, de matériau brut sous la forme de mélange sec, de granulés, de barre extrudée ou analogue, au moins une autre fente de travail étant formée entre d'autres cylindres de calandre (11, 12), cette fente de travail étant traversée par la nappe de feuille avant que celle-ci ne soit délivrée à un dispositif de prélèvement, un ensemble d'étirage ou analogue, et dont le premier cylindre de fusion (10) et/ou le dernier cylindre de calandre (12) est réalisé en tant que cylindre de calibrage à compensation de flexion en comprenant plusieurs éléments de réglage hydrauliques (26) disposés en étant espacés les uns des autres le long de la longueur du cylindre, et destinés à influencer localement la distance de la surface du cylindre de calibrage à la surface du cylindre de calandre qui lui est opposé,
- comportant un dispositif de mesure (16) qui comprend une rangée de zones de mesure (22) disposées à distance les unes des autres et perpendiculairement à la direction d'avance de la nappe de feuille (20), et destinées à mesurer l'épaisseur locale de la nappe de feuille fabriquée, et
- comportant un dispositif de régulation (24) qui commande la pression hydraulique sollicitant les éléments de réglage hydrauliques (26) en fonction des valeurs de mesure du dispositif de mesure (16), qui lui ont été transmises, en réglant ainsi de manière continue, la largeur de la fente de travail assurant l'épaisseur de la feuille.

3. Calandre à cylindres de fusion selon la revendication 2, caractérisée en ce que le premier (10) et le dernier (12) des cylindres de calandre (10, 11, 12) sont réalisés sous forme de cylindres de calibrage, et en ce qu'au moins un cylindre intermédiaire (11) disposé entre les deux précédents est réalisé en tant que cylindre à diamètre plus faible et présentant une rigidité en flexion moindre.

4. Calandre à cylindres de fusion selon la revendication 3, caractérisée en ce que le ou les cylindre(s) intermédiaire(s) (11) présente(nt) un diamètre de préférence nettement inférieur à celui du premier (10) et du dernier (12) des cylindres de calandre.

5. Calandre à cylindres de fusion selon l'une des revendication 1 à 4, caractérisée en ce que le ou les cylindre(s) de calandre (10, 12) réalisé(s) en tant que cylindre(s) de calibrage, se présente(nt) sous la forme de cylindre(s) à compensation de flexion, par exemple en tant que cylindre(s) du type "Thermo-HYDREIN".

6. Calandre à cylindres de fusion selon l'une des revendications 1 à 5, caractérisée en ce que les cylindres de calandre (10, 11, 12) peuvent être chauffés à des températures différentes.

7. Calandre à cylindres de fusion selon l'une des revendications 2 à 6, caractérisée en ce que l'avant dernier cylindre (11) est réalisé en tant que cylindre de calibrage susceptible d'être chauffé, par exemple en tant que cylindre du type "Thermo-HYDREIN".

8. Calandre à cylindres de fusion selon l'une des revendications 1 à 7, caractérisée en ce que le dispositif de mesure (16) fonctionne sans contact.

9. Calandre à cylindres de fusion selon la revendication 8, caractérisée en ce que le dispositif de mesure (16) comporte des capteurs optiques.

10. Calandre à cylindres de fusion selon la revendication 8, caractérisée en ce que le dispositif de mesure (16) comporte des capteurs laser.

11. Calandre à cylindres de fusion selon la revendication 8, caractérisée en ce que le dispositif de mesure (16) est réalisé en tant que dispositif de mesure de rayonnement.

12. Calandre à cylindres de fusion 8, caractérisée en ce que le dispositif de mesure (16) comporte des capteurs acoustiques.

13. Calandre à cylindres de fusion selon l'une des revendications 1 à 7, caractérisée en ce que le dispositif de mesure (16) comporte des capteurs de poids.

14. Calandre à cylindres de fusion selon la revendication 13, caractérisée en ce que le dispositif de mesure (16), dans le cas de l'utilisation de la nappe de feuille (20) pour le revêtement d'une autre nappe de matériau, fonctionne selon un procédé par différence.

15. Calandre à cylindres de fusion selon l'une des revendications 1 à 14, caractérisée en ce que le dispositif de mesure (16) est disposé à proximité de la périphérie du dernier (12) des cylindres de calandre, en se référant à la direction d'avance de la nappe de feuille (20).
